# EUROPEAN PATENT APPLICATION

(11) **EP 3 869 596 A1**
(43) Date of publication of application: **25.08.2021**
(21) Application number: 21155153.6
(22) Date of filing: 04.02.2021
(51) Int. Cl.: H01M 4/66, H01M 4/80, H01M 10/0525

(54) **ELECTRODE FOR LITHIUM ION SECONDARY BATTERIES AND LITHIUM ION SECONDARY BATTERY**

(30) Priority: 18.02.2020 JP 2020024969
(71) Applicant: HONDA MOTOR CO., LTD., Minato-ku Tokyo 107-8556 (JP)
(72) Inventor: TANAAMI, Kiyoshi, Wako-shi, Saitama 351-0193 (JP); ISOGAI, Yuji, Wako-shi, Saitama 351-0193 (JP); TAKAHASHI, Makiko, Wako-shi, Saitama 351-0193 (JP); AOYAGI, Shintaro, Wako-shi, Saitama 351-0193 (JP)
(74) Representative: Herzog, Markus

(57) **Abstract**

Provided are an electrode for lithium ion secondary batteries which is an electrode for obtaining a lithium ion secondary batteries having high energy density with foam metal as the collector, and further being able to improve durability and input/output characteristics (output density), as well as a lithium ion secondary battery made using this electrode for lithium ion secondary batteries.

The electrode layer of the electrode for lithium ion secondary batteries using a collector consisting of foam metal is configured by dividing into a plurality of electrode divided parts, whereby the migration distance of electrons and migration distance of ions in each of the electrode divided parts is shortened.

## Description

This application is based on and claims the benefit of priority from Japanese Patent Application No. 2020-024969, filed on 18 February 2020, the content of which is incorporated herein by reference.

### BACKGROUND OF THE INVENTION

### Field of the Invention

The present invention relates to an electrode for lithium ion secondary batteries, and a lithium ion secondary battery made using this electrode for lithium ion batteries.

### Related Art

Thus far, lithium ion secondary batteries are becoming widespread as secondary batteries having high energy density. Lithium ion secondary batteries have a structure made by having a separator present between the positive electrode and negative electrode, and filling a liquid electrolyte (electrolytic solution).

For such a lithium ion secondary battery, there are various requirements according to the application, and in the case of the application being an automobile or the like, for example, there is a demand for further raising the volumetric energy density. To address this, methods for increasing the filling density of electrode active material can be exemplified.

As a method of increasing the filling density of electrode active material, it has been proposed to use foam metal as the collector constituting the positive electrode layer and the negative electrode layer (refer to Patent Documents 2 and 3).
The foam metal has a network structure with uniform micropore size, and large surface area.
By filling the electrode mixture containing the electrode active material inside of this network structure, it is possible to increase the amount of active material per unit area of the electrode layer.
Patent Document 1: Japanese Unexamined Patent Application, Publication No. 2000-106154
Patent Document 2: Japanese Unexamined Patent Application, Publication No. H07-099058
Patent Document 3: Japanese Unexamined Patent Application, Publication No. H08-329954

### SUMMARY OF THE INVENTION

However, although the electrode made using foam metal as the collector can prepare an electrode of high loaded volume compared to a coated electrode made using metal foil as the collect, the migration distance of electrons and lithium ions has been longer due to the film thickness becoming greater.

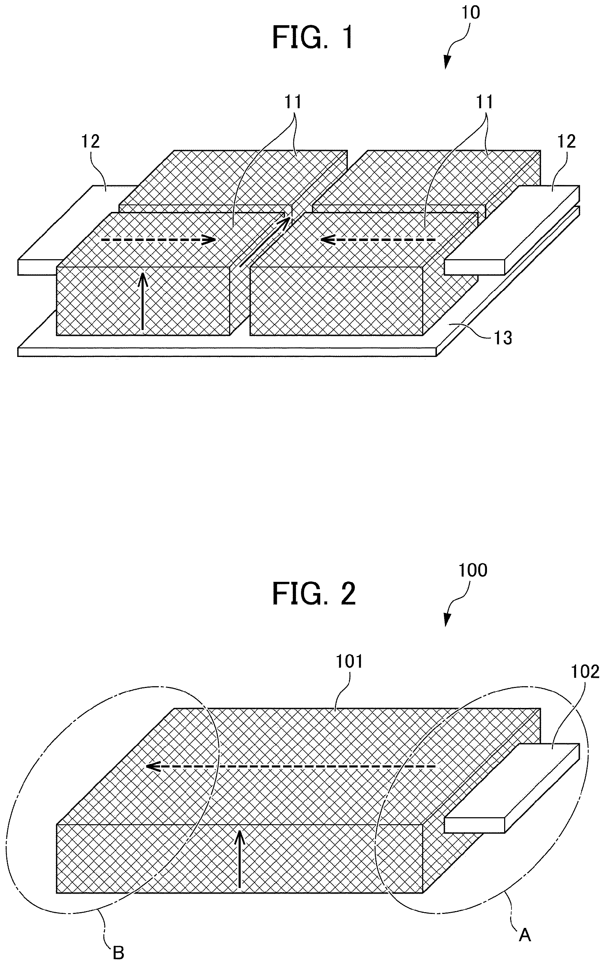

FIG. 2 shows an electrode made using foam metal as the collector. With the electrode 100 shown in FIG. 2, an electrode mixture containing electrode active material is filled into the collector consisting of foam metal, whereby the electrode layer 101 is formed. Then, the electrode tab 102 connected by ultrasonic welding or the like to the foam metal extends from an end face of the electrode layer 101.
In FIG. 2, the arrows of solid lines indicate the movement of lithium ions in the electrode layer 101, and the arrows of dotted lines indicate the movement of electrons in the electrode layer 101.

As shown in FIG. 2, the electrode 100 establishing foam metal as the collector can form the electrode layer 101 of high loaded volume compared to an electrode coating the electrode mixture onto a metal foil.
However, due to the film thickness of the electrode layer increasing, the migration distance of electrons indicated by the arrows of dotted lines, and the migration distance of lithium ion indicated by the arrows of solid lines become large.

More specifically, in FIG. 2, the region of the electrode layer 101 in the vicinity of the electrode tab indicated by "A" is a region in which the cell reaction tends to advance due to the migration distance of electrode being short, and thus degradation of the electrode is fast.
On the other hand, "B" which is a region of the electrode layer far from the electrode tab is a region in which the cell reaction hardly advances due to the migration distance of electrons being large, and thus degradation of the electrode is low.
In this way, with the electrode establishing a foam metal as the collector including the electrode layer 101 of large film thickness, since the migration distance of electrodes becomes long, a region in which the cell reaction tends to advance and a region in which hardly advancing are produced, and thus reaction variation occurs. As a result thereof, localized degradation occurs, and the durability of the battery is poor.

In addition, with the electrode establishing foam metal as the collector having an electrode layer with thickness, the migration distance of ions within the electrode becomes long, and thus ion diffusion resistance increases.
As a result thereof, the situation has been that an increase in cell resistance and a decline in rate characteristic occur, and thus durability declines.

In addition, since the electrode made using foam metal as the collector becomes an electrode having large film thickness, the permeability of the electrolytic solution declines, and permeation of the electrolytic solution to the electrode interior becomes insufficient.
For this reason, the supply of anions and cations is deficient, and the internal resistance of the formed lithium ion secondary battery cell increases, whereby the input/output characteristics of the batter (output density) declines.

The present invention has been made taking account of the above, and the objection thereof is to provide an electrode for lithium ion secondary batteries which is an electrode for obtaining a lithium ion secondary batteries having high energy density with foam metal as the collector, and further being able to improve durability and input/output characteristics (output density), as well as a lithium ion secondary battery made using this electrode for lithium ion secondary batteries.

The present inventors have carried out thorough examination in order to solve the above problem.
Then, it was found that, if configuring the electrode layer of an electrode for lithium ion secondary batteries using a collector consisting of foam metal by dividing into a plurality of electrode divided parts, since the migration distance of electrons and migration distance of ions in each of the electrode divided parts becomes shorter, it is possible to realize lithium ion secondary battery having improved durability and input/output characteristics (output density), while maintaining the energy density to be high, thereby arriving at completion of the present invention.

More specifically, an aspect of the present invention is an electrode for lithium ion secondary batteries, including: a collector which is a foam porous body consisting of metal; an electrode layer in which an electrode mixture is filled into the collector; and an electrode tab, in which the electrode layer is configured by a plurality of electrode divided parts.

A flow channel may be provided between the electrode divided parts which are adjacent.

An electrolytic solution may be filled into the flow channel.

The electrode divided parts may be disposed on a base plate.

The electrode layer may be configured by two electrode divided parts.

A plurality of the electrode divided parts may be connected to the electrode tab.

The electrode layer may be configured by four electrode divided parts.

The flow channels may be disposed substantially in parallel.

The flow channels may be disposed substantially in perpendicular.

The collector may be foam aluminum.

The electrode for lithium ion secondary batteries may be a positive electrode.

The foam porous body may be foam copper.

The electrode for lithium ion secondary batteries may be a negative electrode.

In addition, another aspect of the present invention is a lithium ion secondary battery including: a positive electrode; a negative electrode; and a separator or solid electrolyte layer located between the positive electrode and the negative electrode, in which at least one of the positive electrode and the negative electrode is the electrode for lithium ion secondary batteries as described above.

According to the electrode for lithium ion secondary batteries of the present invention, it is possible to obtain a lithium ion secondary battery having high energy density, and improved durability and input/output characteristics.

### BRIEF DESCRIPTION OF THE DEPICTINGS

FIG. 1 is a view showing an embodiment of an electrode for lithium ion secondary batteries of the present invention;
FIG. 2 is a view showing an embodiment of an electrode for lithium ion secondary batteries made using foam metal as a current collector;
FIG. 3 is a view showing an embodiment of an electrode laminate body made using the electrode for lithium ion secondary batteries of the present invention;
FIG. 4 is a view showing an embodiment of an electrode laminate body made using the electrode for lithium ion secondary batteries of the present invention;
FIG. 5 is a view showing an embodiment of an electrode laminate body made using the electrode for lithium ion secondary batteries of the present invention;
FIG. 6 is a graph showing the initial cell resistances of lithium ion secondary batteries prepared in the Examples and Comparative Examples;
FIG. 7 is a graph showing the C-rate characteristic of lithium ion secondary batteries prepared in the Examples and Comparative Examples; and
FIG. 8 is a graph showing the capacity retention rate for every 200 cycles of lithium ion secondary batteries prepared in the Examples and Comparative Examples.

### DETAILED DESCRIPTION OF THE INVENTION

Hereinafter, an embodiment of the present invention will be explained while referencing the drawings.

### <Electrode for Lithium ion Secondary Batteries>

The electrode for lithium ion secondary batteries includes: a collector which is a foam porous body consisting of metal, electrode layers in which an electrode mixture is filled into the collector, and electrode tabs.

The batteries to which the electrode for lithium ion secondary batteries of the present invention can be applied are not particularly limited, so long as using an electrolytic solution which is a liquid electrolyte.

In addition, the electrolyte for lithium ion secondary batteries of the present invention can be used without problem even if be applied to the positive electrode of a lithium ion secondary battery, applied to the negative electrode, or applied to both. When comparing the positive electrode and negative electrode, since the electron conductivity of the active material which can be used in the negative electrode is high, the electrode for lithium ion secondary batteries of the present invention can acquire a higher effect when used in the positive electrode.

Furthermore, the structure of the electrode for lithium ion secondary batteries of the present invention is not particularly limited, and may be laminate type or winding type.

### (Collector)

The collector constituting the electrode for lithium ion secondary batteries of the present invention is a foam porous body consisting of metal.
The foam porous body consisting of metal is not particular limited so long as being a porous body of metal having voids due to foaming.

The metal foam has a network structure, in which the surface area is high.
By using a foam porous body consisting of metal as the collector, since it is possible to fill the electrode mixture containing electrode active material inside of this network structure, it is possible to increase the active material amount per unit area of the electrode layer, and as a result thereof, possible to improve the volumetric energy density of the lithium ion secondary battery.

In addition, since immobilization of the electrode mixture becomes easy, it is possible to thicken the electrode mixture layer without thickening the coating slurry serving as the electrode mixture.
In addition, it is possible to decrease the binding agent consisting of an organic polymer compound which has been necessary in thickening.

Therefore, comparing with the electrode using a conventional metal foil as the collector, it is possible to thicken the electrode mixture layer, a result of which it is possible to increase the volume per unit area of the electrode, and realize the capacity increase of the lithium ion secondary battery.

As the metal of the foam porous body consisting of metal, for example, nickel, aluminum, stainless steel, titanium, copper, silver, etc. can be exemplified.
Among these, as the collector constituting the positive electrode, a foam aluminum is preferable, and as the collector constituting the negative electrode, foam copper or foam stainless steel can be preferably used.

### (Electrode Layer)

The electrode layer in the electrode for lithium ion secondary batteries of the present invention has an electrode mixture filled into the collector, which is a foam porous body consisting of metal.

The thickness of the electrode layer is not particularly limited; however, the electrode for lithium ion secondary batteries of the present invention can form an electrode layer of large thickness due to using a foam porous body consisting of metal as the collector.
As a result thereof, the active material amount per unit area of the electrode layer increases, and it is possible to obtain a battery of high energy density.

The thickness of the electrode layer of the electrode for lithium ion secondary batteries of the present invention is 200 to 400 pm, for example.

### (Electrode Mixture)

The electrode mixture constituting the electrode layer of the present invention at least includes the electrode active material. The electrode mixtures which can be applied to the present invention may optionally include other components, so long as including the electrode active material as an essential component. The other components are not particularly limited, and it is sufficient so long as being a component which can be used upon preparing the lithium ion secondary battery.
For example, a solid-state electrode, conductive auxiliary agent, binding agent, etc. can be exemplified.

### (Positive Electrode Mixture)

In the positive electrode mixture constituting the positive electrode layer, it may include at least the positive electrode active material, and as other components, may include a solid-state electrolyte, conduction auxiliary agent, binding agent, etc., for example.
As the positive electrode active material, so long as being a material which can occlude and release lithium ions, it is not particularly limited; however, LiCoO₂, Li(Ni_{5/10}Co_{2/10}Mn_{3/10})O₂, Li(Ni_{6/10}Co_{2/10}Mn_{2/10})O₂, Li(Ni_{8/10}Co_{1/10}Mn_{1/10})O₂, Li(Ni_{0.8}Co_{0.15}Al_{0.05})O₂, Li(Ni_{1/6}Co_{4/6}Mn_{1/6})O₂, Li(Ni_{1/3}Co_{1/3}Mn_{1/3})O₂, LiCoO₄, LiMn₂O₄, LiNiO₂, LiFePO₄, lithium sulfide, sulfur, etc. can be exemplified.

### (Negative Electrode Mixture)

In the negative electrode mixture constituting the negative electrode layer, it may include at least the negative electrode active material, and as other components, may include a solid-state electrolyte, conduction auxiliary agent, binding agent, etc., for example.
As the negative electrode active material, although not particularly limited so long as being able to occlude and release lithium ions, for example, it is possible to exemplify metallic lithium, lithium alloy, metal oxide, metal sulfide, metal nitride, Si, SiO, and carbon materials such as artificial graphite, natural graphite, hard carbon and soft carbon.

### (Electrode Divided Part)

The electrode layer in the electrode for lithium ion secondary batteries of the present invention is configured by a plurality of electrode divided parts.

By configuring the electrode layer of the electrode for lithium ion secondary batteries using the collector consisting of foam metal, by dividing into a plurality of electrode divided parts, the electrode for lithium ion secondary batteries of the present invention can shorten the migration distance of electrons and the migration distance of ions in each of the electrode divided parts.

By the migration distance of electrons in each of the electrode divided parts shortening, the reaction variation is suppressed, whereby it is possible to suppress local degradation of the electrode. As a result, it is possible to improve the input/output characteristics (output density) along with the durability, while maintaining the energy density of the obtained lithium ion secondary battery to be high as is.

### (Base Plate)

The electrode layer in the electrode for lithium ion secondary batteries of the present invention is preferably arranged on a base plate having electron conductivity.
In other words, the electrode divided parts constituting the electrode layer are preferably established in a state arranged on the base plate.

By the electrode divided parts being arranged on the base plate having electron conductivity, electron conductivity is imparted to the electrode for lithium ion secondary batteries of the present invention, and migration of electrons between electrode divided parts is facilitated, and thus it is possible to further suppress local variation in the cell reaction.

The base plate having electron conductivity is not particularly limited; however, aluminum foil, copper foil, stainless steel foil, etc. can be exemplified, for example.

### (Shape of Electrode Divided Part)

The shape of the electrode divided part is not particularly limited.
It can be formed in various shapes.
Thereamong, the electrode divided part is preferably a square column or circular column shape.
The square columnar or circular columnar electrode divided part is easily prepared, and thus uniformly forming the flow channels described layer in the electrode layer becomes easy.

### (Connection to Electrode Tabs)

Each of the plurality of electrode divided parts is preferably connected to an electrode tab.
It is possible to facilitate current collection of the electrode by the electrode tabs being connected to each of the electrode divided parts.
In addition, in the case of adopting a base plate, it is more preferable to connect the electrode tabs to the base plate.

It should be noted that, although it may be a configuration in which one electrode divided part is connected to one electrode tab, in the electrode for lithium ion secondary batteries of the present invention, it is preferable for a plurality of electrode divided parts to be connected to one electrode tab.
If a form in which a plurality of electrode divided parts is connected to one electrode tab, since it is possible to decrease the total number of electrode tabs in the electrode, the volume of the electrode can be made smaller, a result of which it is possible to suppress a decline in the volumetric energy density of the cell.

### (Number of Electrode Divided Parts)

So long as the number of electrode divided parts constituting the electrode layer is at least two, it is not particularly limited. However, if the number is too large, since difficulty will arise in connection, etc. with electrode tab, it is preferable to set as a maximum of ten in each of the electrode layers.

In the case of the electrode layer of the electrode for lithium ion secondary batteries of the present invention being configured by two electrode divided parts, for example, it is preferable for the electrode tab to be connected to each electrode divided part. In the case of the electrode layer being configured by two electrode divided parts, it becomes possible to suppress a resistance increase, without causing the energy density to decline.

In addition, in the case of the electrode layer being configured by four electrode divided parts, for example, it is preferable for two electrode divided parts to be connected to one electrode tab. By two electrode divided parts being connected to one electrode tab, it becomes possible to simultaneously improve the electron conductivity and ion conductivity, and the input/output characteristics greatly improves.

### (Flow Channel)

In the electrode layer of the electrode for lithium ion secondary batteries of the present invention, a flow channel is preferably provided between adjacent electrode divided parts.
In other words, in the electrode layer of the electrode for lithium ion secondary batteries, the electrode divided parts each preferably exist as a separate, independent island.
Then, the flow channel is formed in the gap between adjoining electrode divided parts.

It should be noted that the face forming the flow channel of the electrode divided part is the state of the electrode layer in which the electrode mixture is filled into the foam porous body.

Then, in the electrode layer of the electrode for lithium ion secondary batteries of the present invention, an electrolytic solution is preferably filled into the flow channel.
By the electrolytic solution being filled into the flow channel, the permeability of the electrolytic solution to the electrode interior improves, and it is possible to shorten the migration distance of anion and cation, and the ion conductivity can be sufficiently ensured.

By sufficiently permeating electrolytic solution to the electrode interior, and suppressing a supply deficit of anion and cation, it is possible to suppress an increase in the internal resistance of the formed lithium ion secondary battery cell, and improve the input/output characteristics (output density) of the battery.

In addition, even if the film thickness of the electrode layer is larger, since it is possible to shorten the migration distance of ions within the electrode, it is possible to suppress an increase in the ion diffusion resistance, and as a result thereof, it is possible to improve the durability of the rate characteristic, etc. In particular, since it becomes possible to rapidly supply ions in the case of a high load such as a rapid charger being applied, it can contribute to a durability improvement under a high load environment.

Furthermore, even if the film thickness of the electrode layer is large, since it is possible to suppress a supply shortage of electrons, it is possible to suppress an increase in electron resistance, and improve the output characteristic of the lithium ion secondary battery.

### (Arrangement of Flow Channel)

The flow channel is preferably formed so as to make an arrangement passing through substantially the center in the plane of the electrode layer.
By being formed so as to pass through substantially the center in the plane of the electrode layer, in the case of the electrolytic solution being filled into the flow channel, it makes it easier to allow the electrolytic solution to diffuse over the entirety of the electrode layer.
In particular, in the case of a plurality of flow channels being formed in an arrangement which is symmetrical relative to the center of the electrode layer, it is possible to cause the electrolytic solution to more uniformly diffuse over the entirety of the electrode layer.

For example, in the case of the electrode layer being formed by two electrode divided parts, only one flow channel comes to be formed. Then, this one flow channel is preferably formed so as to pass through substantially the center in the plane of the electrode layer.

In addition, for example, in the case of the electrode layer being formed by four electrode divided parts, two or three of the flow channels will be formed.
As the arrangement of two, an example can be exemplified arranging these two flow channels substantially perpendicular, so as depict a cross intersecting at substantially the center in the plane of the electrode layer.
In addition, as an arrangement of three, an example can be exemplified configuring so that one among these three flow channels passes through substantially the center in the plane of the electrode layer, and arranging the remaining two flow channels substantially in parallel at almost equal intervals, so as to be substantially symmetrical with the one as the center.

The arrangement of the electrode divided parts and flow channels of the electrode for lithium ion secondary batteries of the present invention will be explained using FIG. 1.

FIG. 1 is a view showing an embodiment of an electrode for lithium ion secondary batteries of the present invention. In the electrode for lithium ion secondary batteries 10 of the present invention as shown in FIG. 1, the electrode layer is configured by four of the electrode divided parts 11, and the four electrode divided parts 11 are formed on the base plate 13.
In addition, two of the electrode tabs 12 are extending from the pair of corresponding end faces of the electrode layer.

In the electrode for lithium ion secondary batteries 10 of the present invention shown in FIG. 1, two flow channels are formed substantially perpendicularly between the adjoining electrode divided parts 11 in the electrode layer, so as to depict a cross intersecting at substantially the center in the plane of the electrode layer.

The shape of the four electrode divided parts 11 in FIG. 1 is a square column of substantially the same size.
Then, the two flow channels are formed so as to penetrate the electrode layer from one end face of the electrode layer until another end face.

The electrolytic solution is filled into the two flow channels, and the arrow of the solid line in FIG. 1 indicates the movement of lithium ion in the electrode layer, and the arrows of the dotted line indicate the movement of electrons in the electrode layer.

In the electrode for lithium ion secondary batteries 10 of the present invention shown in FIG. 1, by the two flow channels being formed substantially perpendicular so as to depict a cross intersecting at substantially the center in the plane of the electrode laminate, it is possible to easily supply electrolytic solution to the central part of the electrode layer.
As a result thereof, it is possible to improve movement of the electrolytic solution, and migration of lithium ion, and thus possible to suppress the ion diffusion resistance.

In addition, due to dividing the electrode layer into the four electrode divided parts 11, the migration distance of electrons in each electrode divided part 11 becomes shorter, and thus variation in cell reaction can be suppressed.

Furthermore, since the base plate 13 having high electron conductivity is arranged at the lower part of the electrode divided parts 11, the migration of electrons between electrode divided parts 11 is facilitated, and it becomes possible to further suppress reaction variation.

### (Occupancy Rate of Flow Channel in Electrode Layer)

The occupancy rate of the flow channels in the electrode layer is not particularly limited; however, it is preferably set to 0.5% to 5% relative to the electrode layer overall.
In the case of being less than 0.5%, the decline in volumetric energy density of the cell stays at no more than 5 Wh/L, and thus there is no great influence; however, in the case of exceeding 5%, since the amount of electrolytic fluid increases in addition to the decline in volumetric energy density, the electron conductivity declines at the same time as the weight energy density declining, and thus the input/output characteristics of the cell overall declines.

### <Production Method of Electrode for Lithium ion Secondary Batteries>

The production method of the electrode for lithium ion secondary batteries of the present invention is not particularly limited, and can adopt a usual method in the present technical field.

The electrode for lithium ion secondary batteries of the present invention has an electrode layer in which an electrode mixture is filled in the collector consisting of foam porous body consisting of metal, and the electrode layer is configured by a plurality of electrode divided parts.

### (Method of Filling Electrode Mixture)

The method of filling the electrode mixture into the collector is not particularly limited; however, for example, a method of filling a slurry containing the electrode mixture inside of the network structure of the collector using a pressure-type die coater and applying pressure can be exemplified.

After filling the electrode mixture, it is possible to obtain the electrode for lithium ion secondary batteries by adopting a common method in the present technical field.
For example, the electrode for lithium ion secondary batteries is obtained by drying the collector in which the electrode mixture was filled, followed by pressing.
The density of the electrode mixture can be improved by pressing, and it is possible to adjust so as to be the desired density.

### (Method of Forming Electrode Divided Part)

The method of forming the electrode divided part is not particularly limited; however, for example, a method of shearing the foam metal in advance and filling the electrode mixture, and a method of shearing after filling of the electrode mixture can be exemplified.

### (Method of Connecting Electrode Tab)

The method of connecting the electrode tab to the electrode divided part is not particularly limited; however, for example, ultrasonic welding, spot welding, etc. can be exemplified.

### <Lithium ion Secondary Battery>

The lithium ion secondary battery of the present invention includes a positive electrode, a negative electrode, and a separator or solid-state electrolyte layer located between the positive electrode and negative electrode.
In the lithium ion secondary battery of the present invention, at least one of the positive electrode and negative electrode is the above-mentioned electrode for lithium ion secondary batteries of the present invention.

In other words, the lithium ion secondary battery of the present invention, the positive electrode may be the electrode for lithium ion secondary batteries of the present invention, the negative electrode may be the electrode for lithium ion secondary batteries of the present invention, or both may be the electrode for lithium ion secondary batteries of the present invention.

### (Positive Electrode and Negative Electrode)

In the lithium ion secondary battery of the present invention, the positive electrode or the negative electrode not adopting the electrode for lithium ion secondary batteries of the present invention is not particularly limited, and may be any electrode functioning as the positive electrode and negative electrode of a lithium ion secondary battery.

The positive electrode and negative electrode constituting the lithium ion secondary battery can constitute any battery by selecting two types from among materials which can constitute electrodes, comparing the charge/discharge potentials of the two types of compounds, then using one exhibiting electropositive potential as the positive electrode, and one exhibiting electronegative potential as the negative electrode.

### (Separator)

In the case of the lithium ion secondary battery of the present invention containing a separator, the separator is located between the positive electrode and the negative electrode.
The material, thickness, etc. thereof are not particularly limited, and it is possible to adopt a known separator which can be used in a lithium ion secondary battery.

### (Solid-State Electrolyte Layer)

In the case of the lithium ion secondary battery of the present invention containing a solid-state electrolyte, the solid-state electrolyte constituting a cell is located between the positive electrode and the negative electrode.
The solid-state electrolyte contained in the solid-state electrolyte layer is not particularly limited, and is sufficient so long as lithium ion conduction between the positive electrode and negative electrode is possible.
For example, an oxide-based electrolyte or sulfide-based electrolyte can be exemplified.

### EXAMPLES

Examples, etc. of the present invention will be explained hereinafter; however, the present invention is not to be limited to these Examples, etc.

### <Example 1>

### (Production of Positive Electrode for Lithium ion Secondary Batteries)

A foam aluminum having a thickness of 1.0 mm, porosity of 95%, cell number of 46-50 per inch, pore size of 0.5 mm, and specific surface area of 5000 m²/m³ was prepared as the collector.

### (Preparation of Positive Electrode Mixture Slurry)

LiNi_{0.5}Co_{0.2}Mn_{0.3}O₂ was prepared as the positive electrode active material.
The positive electrode mixture slurry was produced by mixing 94 mass% positive electrode active material, 4 mass% carbon black as the conduction auxiliary agent, and 2 mass% polyvinylidene fluoride (PVDF) as a binder, and dispersing the obtained mixture in the appropriate amount of N-methyl-2-pyrrolidone (NMP).

### (Preparation of Positive Electrode Divided Part)

Next, foam aluminum was sheared into four pieces with sizes of 35 mm height and 40 mm width.

### (Formation of Positive Electrode Layer)

Using a plunger-type die coater, the prepared positive electrode mixture slurry was coated onto four pieces of foam aluminum, so as have a coating amount of 90 mg/cm².
Then, by drying for 12 hours at 120°C in vacuum and then roll pressing with 15 tons pressure, the positive electrode layer for lithium ion secondary batteries was produced.

### (Connection of Positive Electrode Tab)

Next, one tab was welded to two positive electrode layers by ultrasonic welding.
Similarly, by welding a tab to the remaining two positive electrode layers, two identical pieces were prepared.

The positive electrode divided part of the obtained positive electrode for lithium ion secondary batteries had a basis weight of 90 mg/cm², and density of 3.2 g/cm³.

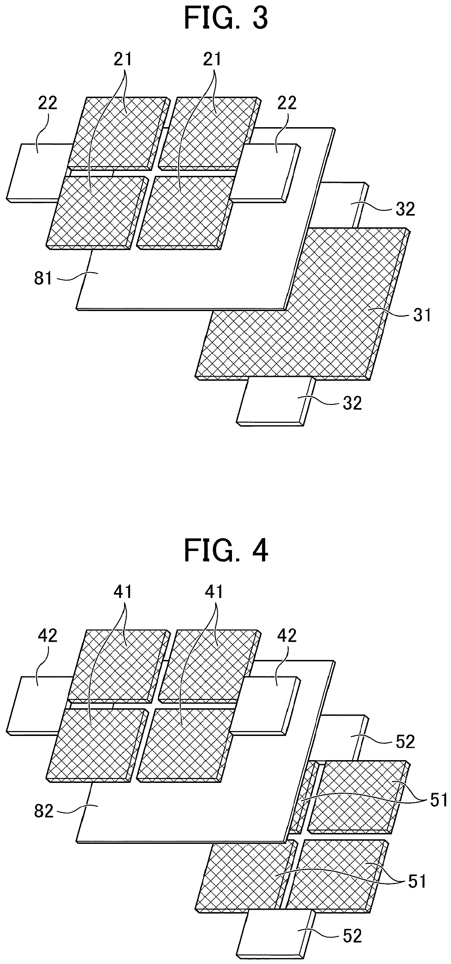

The obtained positive electrode for lithium ion secondary batteries is shown in FIG. 3.
In Example 1, four positive electrode divided parts 21 of 35 mm height, 40 mm width and 300 µm thickness were formed, and two flow channels of 1 mm width were formed substantially perpendicular in the positive electrode layer, so as to depict a cross intersecting substantially the center in the plane of the positive electrode layer. Then, the two flow channels were formed so as to penetrate the electrode layer from one end face of the positive electrode layer until the other end face.

Furthermore, in a form in which two positive electrode tabs 22 respectively connect to two positive electrode divided parts 21, they extend from a pair of corresponding end faces of the positive electrode layer.

### (Production of Negative Electrode for Lithium ion Secondary Batteries)

A foam aluminum was prepared having a thickness of 1.0 mm, porosity of 95%, cell number of 46 to 50 per inch, pore size of 0.5 mm and specific surface area of 5000 m²/m³ as the collector.

### (Production of Negative Electrode Mixture Slurry)

A negative electrode mixture slurry was produced by mixing 96.5 mass% of natural graphite, 1 mass% of carbon black as a conduction auxiliary agent, 1.5 mass% of styrene-butadiene rubber (SBR) as a binder, and 1 mass% of sodium carboxymethyl cellulose (CMC) as a thickening agent, and dispersing the obtained mixture in the appropriate amount of distilled water.

### (Formation of Negative Electrode Layer)

The produced negative electrode mixture slurry was coated onto the collector using a die coater so as to make a coating amount of 45 mg/cm².
By drying for 12 hours at 120°C in vacuum and then roll pressing with 10 tons pressure, the negative electrode for lithium ion secondary batteries was produced.
The electrode layer of the obtained negative electrode for lithium ion secondary batteries had a basis weight of 45 mg/cm², and density of 1.5 g/cm³.
The produced negative electrode was used by punch processing to 74 mm x 84 mm.

### (Connection of Negative Electrode Tab)

Next, tabs were welded to both ends by ultrasonic waves.

The obtained negative electrode for lithium ion secondary batteries is shown in FIG. 3.
In Example 1, a negative electrode layer of 74 mm height, 84 mm width and 300 µm thickness was formed, and two negative electrode tabs 32 extend from a pair of corresponding end faces of the negative electrode layer.

### (Production of Lithium ion Secondary Battery)

A microporous membrane made into a three-layer laminate of polypropylene/ polyethylene/ polypropylene of 25 µm thickness was prepared as the separator, and punched to a size of 80 mm x 90 mm. Inside of the product of heat sealing an aluminum laminate for secondary batteries and processing into a bag shape, a laminate made by arranging the separator between the positive electrode and negative electrode prepared as described above was inserted to prepare a laminate cell.

As the electrolytic solution, a solution was prepared in which 1.2 moles of LiPF₆ was dissolved in a solvent prepared by mixing ethylene carbonate, dimethyl carbonate and ethyl methyl carbonate in the volumetric ratio of 3:4:3, then injected into the above-mentioned laminate to produce the lithium ion secondary battery.

The configuration of the electrode laminate of the lithium ion secondary battery produced in Example 1 is shown in FIG. 3. In Example 1, a separator 81 was arranged between the positive electrode and negative electrode, and two positive electrode tabs 22 and two negative electrode tabs 32 made a perpendicular arrangement.

### <Example 2>

### (Production of Positive Electrode for Lithium ion Secondary Batteries)

The positive electrode for lithium ion secondary batteries was produced similarly to Example 1.

The positive electrode divided parts in the obtained positive electrode for lithium ion secondary batteries had a basis weight of 90 mg/cm², and density of 3.2 g/cm³.

The obtained positive electrode for lithium ion secondary batteries is shown in FIG. 4.
In Example 2, similarly to Example 1, four positive electrode divided parts 41 of 35 mm height, 40 mm width and 300 µm thickness were formed, and two flow channels of 1 mm width were formed substantially perpendicular in the positive electrode layer, so as to depict a cross intersecting substantially the center in the plane of the positive electrode layer.
Then, the two flow channels were formed so as to penetrate the electrode layer from one end face of the positive electrode layer until the other end face.

Furthermore, in a form connecting two positive electrode tabs 42 to two positive electrode divided parts 41, respectively, they extend from a pair of corresponding end faces of the electrode layer.

### (Production of Negative Electrode for Lithium ion Secondary Battery)

### (Preparation of Negative Electrode Mixture Slurry)

The negative electrode mixture slurry was produced similarly to Example 1.

### (Formation of Negative Electrode Layer)

A foam copper was prepared having a thickness of 1.0 mm, porosity of 95%, cell number of 46 to 50 per inch, pore size of 0.5 mm and specific surface area of 5000 m²/m³ as the collector.

### (Preparation of Negative Electrode Divided part)

Next, foam copper was sheared into four with sizes of 37 mm height and 42 mm width.

### (Formation of Negative Electrode Layer)

Using a die coater, the prepared negative electrode mixture slurry was coated onto the four pieces of foam copper, so as have a coating amount of 45 mg/cm².
By drying for 12 hours at 120°C in vacuum and then roll pressing with 10 tons pressure, the negative electrode layer for lithium ion secondary batteries was produced.

### (Connection of Negative Electrode Tab)

Next, one tab was welded to two negative electrode layers by ultrasonic welding.
Similarly, by welding a tab to the remaining two negative electrode layers, two identical pieces were prepared.

The negative electrode divided part in the electrode layer of the obtained negative electrode for lithium ion secondary batteries had a basis weight of 45 mg/cm², and density of 1.5 g/cm³.

The obtained negative electrode for lithium ion secondary batteries is shown in FIG. 4.
In Example 2, four negative electrode divided parts 51 of 37 mm height, 42 mm width and 300 µm thickness were formed, and two flow channels of 1 mm width were formed substantially perpendicular in the negative electrode layer, so as to depict a cross intersecting substantially the center in the plane of the negative electrode layer. Then, the two flow channels were formed so as to penetrate the electrode layer from one end face of the positive electrode layer until the other end face.

Furthermore, in a form in which two negative electrode tabs 52 respectively connect to two negative electrode divided parts 51, they extend from a pair of corresponding end faces of the negative electrode layer.

### (Production of Lithium ion Secondary Battery)

Except for using the positive electrode and negative electrode prepared above, the lithium ion secondary battery was produced similarly to Example 1.

The configuration of the electrode laminate of the lithium ion secondary battery produced in Example 2 is shown in FIG. 4. In Example 2, a separator 82 was arranged between the positive electrode and negative electrode, and two positive electrode tabs 42 and two negative electrode tabs 52 made a perpendicular arrangement.

### <Comparative Example 1>

### (Production of Positive Electrode for Lithium ion Secondary Batteries)

The positive electrode layer for lithium ion secondary batteries was produced similarly to Example 1, other than punching to 70 mm x 80 mm and using without forming positive electrode divided parts. Only one positive electrode tab was connected by the same method as Example 1 to the prepared positive electrode layer to obtain the positive electrode for lithium ion secondary batteries.

The electrode layer in the positive electrode in the obtained positive electrode for lithium ion secondary batteries had a basis weight of 90 mg/cm², and density of 3.2 g/cm³.

### (Production of Negative Electrode for Lithium ion Secondary Batteries)

The negative electrode for lithium ion secondary batteries was produced similarly to Example 1, except for connecting only one negative electrode tab.

### (Production of Lithium ion Secondary Battery)

A lithium ion secondary battery was produced similarly to Example 1, other than using the positive electrode and negative electrode prepared above.

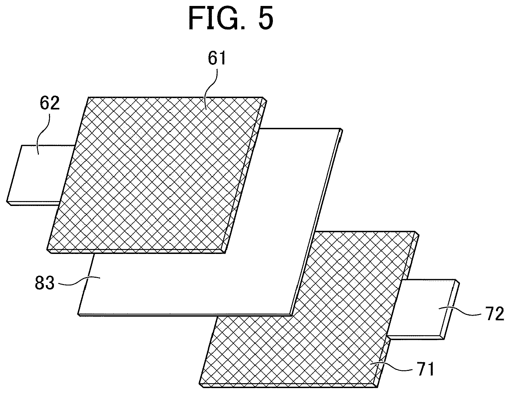

The configuration of the electrode laminate body of the lithium ion secondary battery produced in Comparative Example 1 is shown in FIG. 5.
In Comparative Example 1, a separator 83 was arranged between the positive electrode and negative electrode, and the positive electrode tab 62 and negative electrode tab 72 made an arrangement extending from a pair of opposing end faces.

### (Evaluation of Lithium ion Secondary Battery)

The following evaluations were performed on the lithium ion secondary batteries obtained in Examples 1 and 2, and Comparative Example 1.

### (Initial Discharge Capacity)

The lithium ion secondary battery was left for 3 hours at the measurement temperature (25°C), constant-current charging was performed until 4.2 V at 0.33C, then constant-voltage charging was performed for 5 hours at a voltage of 4.2 V, and left for 30 minutes, followed by performing discharging until 2.5 V at a discharge rate of 0.33C to measure the discharge capacity.
The obtained discharge capacity was defined as the initial discharge capacity.

### (Initial Cell Resistance)

The lithium ion secondary batteries after the initial discharge capacity measurement were adjusted to 50% charge level (SOC (State of Charge)).
Next, they were discharged for 10 seconds with a current value of the value of 0.2C, and the voltage after 10 seconds was measured. Then, with the current value as the horizontal axis and the voltage as the vertical axis, each voltage after 0.1 seconds, 1 second and 10 seconds was plotted relative to the current of 0.2C. Next, after leaving for 10 minutes, the SOC was returned to 50% by performing auxiliary charging, and then left for 10 more minutes. Next, the same operations as mentioned above were performed for each C rate of 0.5C, 1.0C, 1.5C, 2.0C, 2.5C, and each voltage after 0.1 seconds, 1 second and 10 seconds relative to charging at each C rate were plotted.
The slope of the approximate line obtained from each plot was defined as the initial cell resistance of the lithium ion secondary battery.

### (C Rate Characteristic)

The lithium ion secondary battery after the initial discharge capacity measurement was left for 3 hours at the measurement temperature (25°C), the constant-current charging was performed until 4.2 V at 0.33C, then constant-voltage charging was performed for 5 hours until the voltage of 4.2 V, and left for 30 minutes, followed by performing discharging until 2.5 V at the discharge rate of 0.5C to measure the discharge capacity.
The above-mentioned experiments were performed for each C rate of 1C, 1.5C, 2C and 2.5C, and the data summarizing the discharge capacities at each C rate by the capacity retention rate when defining the capacity of 0.33C as 100% was defined as the C rate characteristic.

### (Endurance Discharge Capacity)

As a charge/discharge cycle endurance test, one cycle was defined as the operations of performing constant-current charging until 4.2 V at 0.6C with a constant temperature oven at 45°C, followed by performing constant-voltage changing until the voltage of 4.2 V or charging for 5 hours or until becoming a current of 0.1C, and then leaving for 30 minutes, and then performing constant-current discharge until 2.5 V at a discharge rate of 0.6C and leaving for 30 minutes, and this operation was repeated for 200 cycles.
After the completion of 200 cycles, the constant temperature oven was set to 25°C, and left for 24 hours in a state after 2.5 V discharging, after which the discharge capacity was measured similarly to the measurement of the initial discharge capacity.
This operation was repeated for every 200 cycles, and measured until 600 cycles.

### (Endurance Cell Resistance)

After completion of 600 cycles, it was adjusted to 50% charge level (SOC (State of Charge)), and the endurance cell resistance was obtained by a method similar to the measurement of the initial cell resistance.

### (Capacity Retention)

The discharge capacity for every 200 cycles relative to the initial discharge capacity was obtained, and defined as the capacity retention for each cycle.

### (Resistance Change Rate)

The cell resistance after enduring 600 cycles relative to the initial cell resistance was obtained, and defined as the resistance change rate.

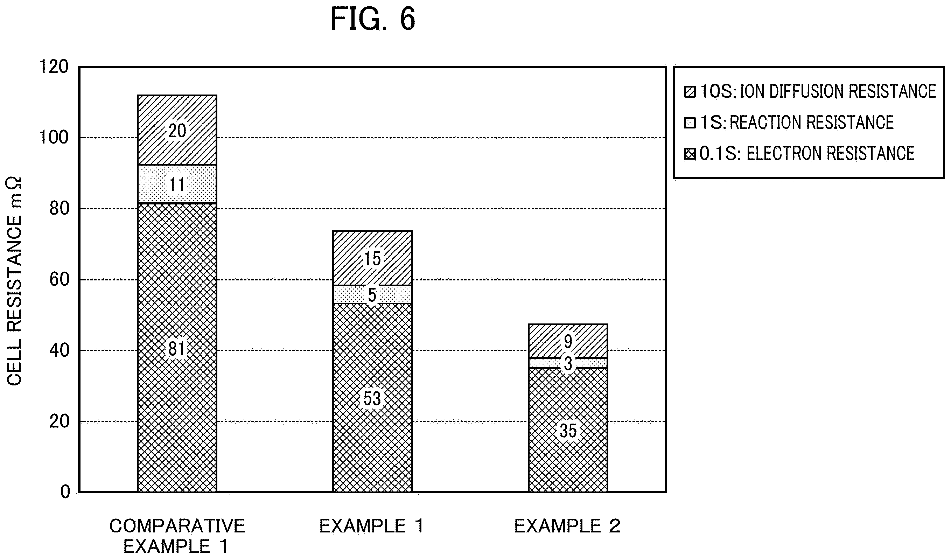

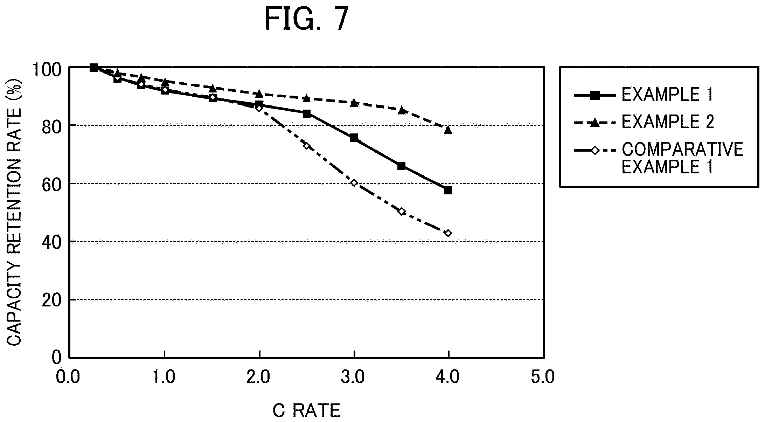

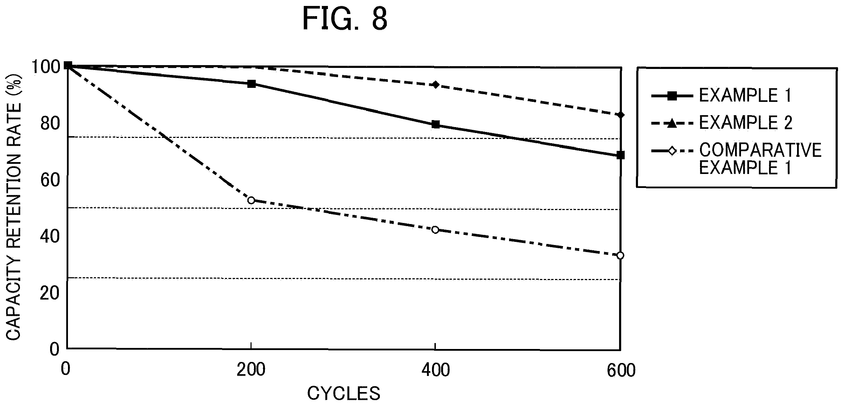

Table 1 shows various measurement results of the lithium ion secondary batteries produced in the Examples and Comparative Examples. FIG. 6 shows the initial cell resistance of the lithium ion secondary batteries produced in the Examples and Comparative Examples, and FIG. 7 shows the C rate characteristic of the lithium ion secondary batteries produced in the Examples and Comparative Examples. FIG. 8 shows the capacity retention for every 200 cycles.

**[Table 1]**

| | | Example 1 | Example 2 | Comparative Example 1 |
|---|---|---|---|---|
| Initial discharge capacity (mAh) | | 1684 | 1659 | 1729 |
| Initial cell resistance (Ω) at discharge side | 0.1S:Electronic resistance | 53 | 35 | 81 |
| | 1S:Reaction resistance | 5 | 3 | 11 |
| | 10S:Ion diffusion resistance | 15 | 9 | 20 |
| | Total | 74 | 47 | 112 |
| C-rate characteristic | 0.5 C Discharge capacity(mAh) | 1620 | 1626 | 1666 |
| | 0.5 C Capacity retention(%) | 96.2 | 98.0 | 96.4 |
| | 0.75 C Discharge capacity(mAh) | 1578 | 1601 | 1628 |
| | 0.75 C Capacity retention(%) | 93.7 | 96.5 | 94.2 |
| | 1.0 C Discharge capacity(mAh) | 1548 | 1578 | 1596 |
| | 1.0 C Capacity retention(%) | 91.9 | 95.1 | 92.3 |
| | 1.5 C Discharge capacity(mAh) | 1502 | 1540 | 1548 |
| | 1.5 C Capacity retention(%) | 89.2 | 92.8 | 89.6 |
| | 2.0 C Discharge capacity(mAh) | 1465 | 1507 | 1484 |
| | 2.0 C Capacity retention (%) | 86.9 | 90.9 | 85.9 |
| | 2.5 C Discharge capacity (mAh) | 1416 | 1480 | 1267 |
| | 2.5 C Capacity retention (%) | 84.1 | 89.2 | 73.3 |
| | 3.0 C Discharge capacity (mAh) | 1274 | 1457 | 1044 |
| | 3.0 C Capacity retention (%) | 75.6 | 87.8 | 60.4 |
| | 3.5 C Discharge capacity (mAh) | 1114 | 1416 | 872 |
| | 3.5 C Capacity retention (%) | 66.1 | 85.4 | 50.4 |
| | 4.0 C Discharge capacity (mAh) | 974 | 1303 | 741 |
| | 4.0 C Capacity retention (%) | 57.8 | 78.6 | 42.9 |
| Durability test | Discharge capacity after 200 cycles (mAh) | 1643 | 1659 | 1402 |
| | Capacity retention after 200 cycles (%) | 97.6 | 100.0 | 81.1 |
| | Discharge capacity after 400 cycles (mAh) | 1547 | 1618 | 1332 |
| | Capacity retention after 400 cycles (%) | 91.9 | 97.5 | 77.1 |
| | Discharge capacity after 600 cycles (mAh) | 1476 | 1549 | 1269 |
| | Capacity retention after 600 cycles (%) | 87.6 | 93.4 | 73.4 |
| Cell resistance after 600 cycle endurance (Ω) | | 97 | 77 | 197 |
| Resistance change rate (%) | | 131.6 | 161.8 | 175.9 |

As shown in FIG. 6, with the batteries of Examples 1 and 2 made using the electrodes for lithium ion secondary batteries of the present invention configuring the electrode layers by electrode divided parts, the cell resistance was suppressed compared to the battery of Comparative Example 1.

As shown in FIG. 7, the C rate characteristics of the batteries of Examples 1 and 2 became high values compared to the battery of Comparative Example 1.
In other words, with the battery made using the electrode for lithium ion secondary batteries of the present invention configuring the electrode layers by electrode divided parts, the ion diffusivity improved.

As shown in FIG. 8, the capacity retention for every 200 cycles of the batteries of Examples 1 and 2 becomes a higher value as the cycle number increases, compared to the battery of Comparative Example 1.
In other words, with the battery made using the electrode for lithium ion secondary batteries of the present invention configuring the electrode layers by the electrode divided parts, the durability improved.

Provided are an electrode for lithium ion secondary batteries which is an electrode for obtaining a lithium ion secondary batteries having high energy density with foam metal as the collector, and further being able to improve durability and input/output characteristics (output density), as well as a lithium ion secondary battery made using this electrode for lithium ion secondary batteries. The electrode layer of the electrode for lithium ion secondary batteries using a collector consisting of foam metal is configured by dividing into a plurality of electrode divided parts, whereby the migration distance of electrons and migration distance of ions in each of the electrode divided parts is shortened.

### EXPLANATION OF REFERENCE NUMERALS

10, 100 electrode
11 electrode divided part
101 electrode layer
12, 102 electrode tab
13 base plate
21, 41 positive electrode divided part
61 positive electrode layer
22, 42, 62 positive electrode tab
31, 71 negative electrode layer
51 negative electrode divided part
32, 52, 72 negative electrode tab
81, 82, 83 separator
A region of electrode layer near electrode tab
B region of electrode layer far from electrode tab

## Claims

1. An electrode for lithium ion secondary batteries, comprising:
a collector which is a foam porous body consisting of metal; an electrode layer in which an electrode mixture is filled into the collector; and an electrode tab,
wherein the electrode layer is configured by a plurality of electrode divided parts.

2. The electrode for lithium ion secondary batteries according to claim 1, further comprising a flow channel between the electrode divided parts which are adjacent.

3. The electrode for lithium ion secondary batteries according to claim 2, wherein an electrolytic solution is filled into the flow channel.

4. The electrode for lithium ion secondary batteries according to any one of claims 1 to 3, wherein the electrode divided parts are disposed on a base plate.

5. The electrode for lithium ion secondary batteries according to any one of claims 1 to 4, wherein the electrode layer is configured by two electrode divided parts.

6. The electrode for lithium ion secondary batteries according to any one of claims 1 to 4, wherein a plurality of the divided parts is connected to the electrode tab.

7. The electrode for lithium ion secondary batteries according to any one of claims 1 to 4 and 6, wherein the electrode layer is configured by four electrode divided parts.

8. The electrode for lithium ion secondary batteries according to any one of claims 2 to 4, 6 and 7, wherein the flow channels are disposed substantially in parallel.

9. The electrode for lithium ion secondary batteries according to any one of claims 2 to 4, 6 and 7, wherein the flow channels are disposed substantially in perpendicular.

10. The electrode for lithium ion secondary batteries according to any one of claims 1 to 9, wherein the collector is foam aluminum.

11. The electrode for lithium ion secondary batteries according to any one of claims 1 to 10, wherein the electrode for lithium ion secondary batteries is a positive electrode.

12. The electrode for lithium ion secondary batteries according to any one of claims 1 to 9, wherein the foam porous body is foam copper.

13. The electrode for lithium ion secondary batteries according to any one of claims 1 to 9 and 12, wherein the electrode for lithium ion secondary batteries is a negative electrode.

14. A lithium ion secondary battery, comprising: a positive electrode; a negative electrode; and a separator or solid electrolyte layer located between the positive electrode and the negative electrode, wherein at least one of the positive electrode and the negative electrode is the electrode for lithium ion secondary batteries according to any one of claims 1 to 13.
